# EUROPEAN PATENT SPECIFICATION

(11) **EP 2 610 152 B1**
(45) Date of publication and mention of the grant of the patent: **24.09.2014**
(21) Application number: 12189929.8
(22) Date of filing: 25.10.2012
(51) Int. Cl.: B62J 17/00, B62J 23/00

(54) **Motorised Scooter**
Motorroller
Trottinette à moteur

(30) Priority: 28.12.2011 JP 2011289100
(43) Date of publication of application: 03.07.2013
(73) Proprietor: Yamaha Hatsudoki Kabushiki Kaisha, Iwata-shi, Shizuoka-ken 438-8501 (JP)
(72) Inventor: Kodama, Ayumu, Shizuoka-ken, 438-8501 (JP)
(74) Representative: Zimmermann, Tankred Klaus

(56) References cited:
- FR-A1- 2 709 455
- JP-U- H0 291 082

## Description

### Technical Field

The present invention relates to a scooter.

### Background Art

A scooter includes an engine unit, wheels, etc., a body frame for supporting the engine unit, wheels, etc. and a body cover for covering at least a portion of the body frame and the engine unit, etc. The scooter also includes a low footrest located forward to the engine unit, and a seat located above the engine unit. Usually, the body cover includes a below-the-seat cover located below a front portion of the seat, and a side cover located at a position which is below the seat and is rearward to the below-the-seat cover as seen in a vehicle side view.

The body cover has a role of improving an external appearance of the scooter by covering the body frame and the like and also a role of suppressing invasion, from outside, of dust, rainwater, muddy water splashed from a road surface, or the like. From the point of view of suppressing invasion of dust or water into the engine unit and the like as much as possible, it is preferable to enlarge the body cover so that as many members of the scooter as possible including the engine unit and the like are covered with the body cover.

However, in the case of a scooter, a maintenance work of the engine unit and the like needs to be done from outside, and the body cover occasionally becomes an obstacle for the maintenance work. In many cases, the body cover needs to be removed for the maintenance work.

Removing a large body cover is a troublesome work. Therefore, conventionally, the body cover is divided into a plurality of cover members so that each of the cover members can be attached or removed independently. For example, Patent Document 1 identified below describes a structure in which a frame body cover (hereinafter, referred to as a "side cover") for covering a lateral surface of a rear portion of the body frame is divided into an upper part and a lower part. The upper part is located above the lower part. The border between the upper part and the lower part extends substantially straight in a front-rear direction as seen in the vehicle side view. The side cover is structured such that only the upper part is removable.

### Citation List

### Patent Literature

Patent document 1: Japanese Laid-Open Utility Model Publication No. Hei 2-91082 which discloses the features of the preamble of claim 1.

### Summary of Invention

### Technical Problem

In the case where the side cover includes a plurality of cover members, the side cover can cover many members including the engine unit and the like. In addition, since a portion of the cover members is removable, the maintenance work is made easy. Thus, the maintenance work can be done easily while invasion of dust or water into the engine unit and the like is suppressed.

However, the side cover described in Patent Document 1 has a simple shape with which the upper part is merely located above the lower part. Recently, scooters have complicated structures and sophisticated designs. In the case where the side cover for such a scooter is formed of a plurality of cover members, the shape of each cover member tends to be complicated. Therefore, it is difficult to apply the structure described in Patent Document 1 as it is for such scooters.

In the side cover described in Patent Document 1, the border between the upper part and the lower part extends substantially straight in the front-rear direction as seen in the vehicle side view. Therefore, if there is a size error of the upper part or the lower part, there is a problem that the border is partially offset due to the size error, resulting in, for example, a gap being made between the upper part and the lower part. When, for example, the length in an up-down direction of a rear portion of the upper part is shorter than the design value, a front portion of the upper part can be coupled to a front portion of the lower part with no gap, but a lower edge of the rear portion of the upper part is away from an upper edge of a rear portion of the lower part. As a result, a gap may be made between the upper part and the lower part. When the length in the front-rear direction of the upper part is longer than the design value, the rear portion of the upper part protrudes rearward from the rear portion of the lower part. As a result, the rear portion of the upper part and the rear portion of the lower part may not be assembled together well.

The present invention made in light of such circumstances has an object of providing a scooter including a side cover which includes a plurality of cover members, which are assembled together well.

### Solution to Problem

A scooter according to the present invention includes an engine unit swingably supported to a body frame; a footrest located forward to the engine unit; a seat located above the engine unit; a below-the-seat cover located at a position which is below a front end of the seat and is above the footrest as seen in a vehicle side view, and at least partially located forward to the engine unit; and a side cover located at a position which is rearward to the below-the-seat cover and is below the seat as seen in the vehicle side view, and at least partially located lateral to a portion of the engine unit. The side cover includes a front cover member located rearward to the below-the-seat cover as seen in the vehicle side view and a rear cover member located rearward to the front cover member as seen in the vehicle side view. The front cover member has a V-shaped convexed portion protruding forward as seen in the vehicle side view and a V-shaped concaved portion located rearward to the convexed portion and concaved forward as seen in the vehicle side view. The rear cover member has a V-shaped convexed portion protruding forward as seen in the vehicle side view. The front cover member and the rear cover member are assembled together such that the convexed portion of the rear cover member enters the concaved portion of the front cover member as seen in a vehicle side view and such that an upper edge and a lower edge of the concaved portion of the front cover member are respectively laid on, and are outer in a vehicle width direction to, an upper edge and a lower edge of the convexed portion of the rear cover member. The front cover member is removable without removing the rear cover member. The scooter further includes a horizontal wall located at a position which is outer in the vehicle width direction to the below-the-seat cover in a vehicle width direction and is rearward to the below-the-seat cover; and a vertical wall extending upward from the horizontal wall. The lower edge of the convexed portion of the front cover member is away in an upward direction from the horizontal wall and is away in an outward direction from the vertical wall in the vehicle width direction.

According to the scooter, the side cover includes the front cover member and the rear cover member, and the front cover member and the rear cover member are assembled together to form the side cover. Since a relatively large side cover can be formed of the front cover member and the rear cover member, invasion of dust or water into the engine unit or the like can be suppressed. In addition, the front cover member is removable without removing the rear cover member. Therefore, a maintenance work can be performed by merely removing the front cover member, which makes the maintenance work easy.

According to the scooter, the front cover member and the rear cover member are assembled together such that the border therebetween is V-shaped as seen in the vehicle side view. The front cover member and the rear cover member are assembled together such that the upper edge and the lower edge of the concaved portion of the front cover member are respectively laid on, so as to be outer in the vehicle width direction to, the upper edge and the lower edge of the convexed portion of the rear cover member. Therefore, even if there is a size error of the front cover member or the rear cover member in the front-rear direction or the up-down direction, a gap is not made between the front cover member and the rear cover member. According to the scooter, the lower edge of the convexed portion of the front cover member is away in an upward direction from the horizontal wall, and is away in an outward direction from the vertical wall in the vehicle width direction. Therefore, even if there is a size error of the front cover member or the rear cover member in the up-down direction or in the left-right direction (same as the vehicle width direction), this merely results in a change of the distance between the lower edge of the convexed portion of the front cover member and the horizontal wall or the vertical wall. Namely, even if there is a size error of the front cover member or the rear cover member in the up-down direction or in the left-right direction, the size error can be compensated for by the lower edge of the convexed portion of the front cover. Accordingly, it can be avoided that dust or water invades easily and that the external appearance is deteriorated.

In an embodiment of the present invention, among the upper edge of the concaved portion of the front cover member and the upper edge of the convexed portion of the rear cover member, one has an insertion groove concaved inward in the vehicle width direction, and the other has an insertion piece extending inward in the vehicle width direction and insertable into the insertion groove. Among the lower edge of the concaved portion of the front cover member and the lower edge of the convexed portion of the rear cover member, one has an insertion groove concaved inward in the vehicle width direction, and the other has an insertion piece extending inward in the vehicle width direction and insertable into the insertion groove. The insertion grooves each have a width larger than a thickness of the insertion piece corresponding thereto.

According to an embodiment of the present invention, the upper edge of the convexed portion of the rear cover member has an insertion groove concaved inward in the vehicle width direction, and the upper edge of the concaved portion of the front cover member has an insertion piece extending inward in the vehicle width direction and insertable into the insertion groove. The lower edge of the convexed portion of the rear cover member has an insertion groove concaved inward in the vehicle width direction, and the lower edge of the concaved portion of the front cover member has an insertion piece extending inward in the vehicle width direction and insertable into the insertion groove. The insertion grooves each have a width larger than a thickness of the insertion piece corresponding thereto.

The width of the insertion groove is larger than the thickness of the insertion piece. Therefore, even if the position of the insertion piece is slightly shifted, the insertion piece can be fit into the insertion groove. The front cover member and the rear cover member can be assembled together well while the size error is compensated for.

According to another embodiment of the present invention, the scooter further includes a member on which a maintenance work is to be performed, the member being at least partially located inner to the front cover member in the vehicle width direction.

Owing to this, by removing the front cover member, a member on which a maintenance work is performed (hereinafter, referred to as a "maintenance target member") can be at least partially exposed to the lateral side in the vehicle width direction. Therefore, the maintenance work can be performed easily on the maintenance target member from outside in the vehicle width direction.

According to still another embodiment of the present invention, the engine unit includes, as the member, a transmission case, a portion of which is located lateral to the front cover member and the remaining portion of which is exposed; and a belt-type continuously variable transmission accommodated in the transmission case.

Owing to this, by removing the front cover member, a maintenance work can be performed easily on the belt-type continuously variable transmission. Namely, after the front cover member is removed, the transmission case can be removed easily. Thus, the belt of the belt-type continuously variable transmission can be, for example, replaced easily.

According to still another embodiment of the present invention, the member is an air cleaner, a portion of which is located lateral to the front cover member and the remaining portion of which is exposed.

Owing to this, by removing the front cover member, a maintenance work can be performed easily on the air cleaner. For example, in the case where the air cleaner includes a case and an element located in the case, the case can be easily dissembled and thus the element can be easily replaced after the front cover member is removed.

According to still another embodiment of the present invention, the horizontal wall forms a portion of the footrest. The footrest has a rear end portion extending rearward from the horizontal wall. When the front cover member is removed, the rear end portion of the footrest and the rear cover member are away from each other as seen in the vehicle side view.

Owing to this, when the front cover member is removed, a space is formed between the rear end portion of the footrest and the rear cover member. Thus, a space for the maintenance work can be provided with certainty. This makes the maintenance work easy.

According to still another embodiment of the present invention, an opening is formed between the front cover member and the vertical wall as seen in the vehicle side view. A vehicle member operable by a tool inserted into the opening is located inside the opening.

Owing to this, the tool can be inserted into the opening, so that the vehicle member is operated by the tool. The vehicle member can be operated without removing the front cover member.

According to still another embodiment of the present invention, the scooter further includes an electric device located in a space enclosed by the seat, the below-the-seat cover and the side cover. An opening is formed between the front cover member and the vertical wall as seen in the vehicle side view. The electric device is located at a position obliquely upward and rearward to the opening as seen in the vehicle side view.

The electric device is located in the space enclosed by the seat, the below-the-seat cover and the side cover. Therefore, the temperature of the electric device tends to be high. However, the electric device is located obliquely upward and rearward to the opening as seen in the vehicle side view. Therefore, the air sucked through the opening easily flows around the electric device. Since the air cools the electric device, the temperature rise of the electric device is suppressed.

According to still another embodiment of the present invention, the front cover member has another V-shaped convexed portion protruding rearward as seen in the vehicle side view and another V-shaped concaved portion located forward to the another convexed portion and concaved rearward as seen in the vehicle side view. The horizontal wall forms a portion of the footrest. The footrest has a rear end portion extending rearward from the horizontal wall. The rear end portion is located inner to the another concaved portion as seen in the vehicle side view.

Owing to this, the side cover includes the front cover member which is generally Z-shaped as seen in the vehicle side view. The lower portion of the front cover member is located below the rear end portion of the footrest. Therefore, the front cover member can be secured below the rear end portion of the footrest, which can increase the rigidity of the front cover member.

### Advantageous Effect of Invention

According to the present invention, a scooter including a side cover which includes a plurality of cover members, which are assembled together well.

### Brief Description of Drawings

FIG. 1 is a perspective view of a scooter in an embodiment.
FIG. 2 is a left side view of the scooter in the embodiment.
FIG. 3 is a left side view of the scooter in the embodiment in a state where a seat, a below-the-seat cover, and a front cover member have been removed.
FIG. 4 is a left side view of the below-the-seat cover.
FIG. 5 is a left side view of the front cover member.
FIG. 6 is a left side view of a rear cover member.
FIG. 7 is a cross-sectional view of a side cover and the like taken along line VII-VII in FIG. 2.
FIG. 8 is an enlarged view of portion VIII in FIG. 7.
FIG. 9 is a partial left side view of the scooter in which the front cover member is partially cut out.
FIG. 10 is a partial right side view of the scooter in which the front cover member is partially cut out.

### Description of Embodiments

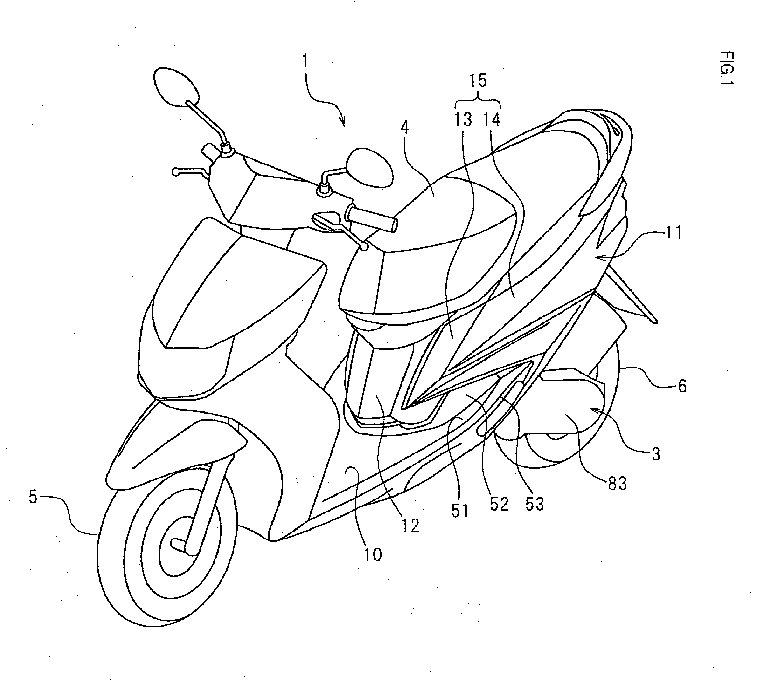

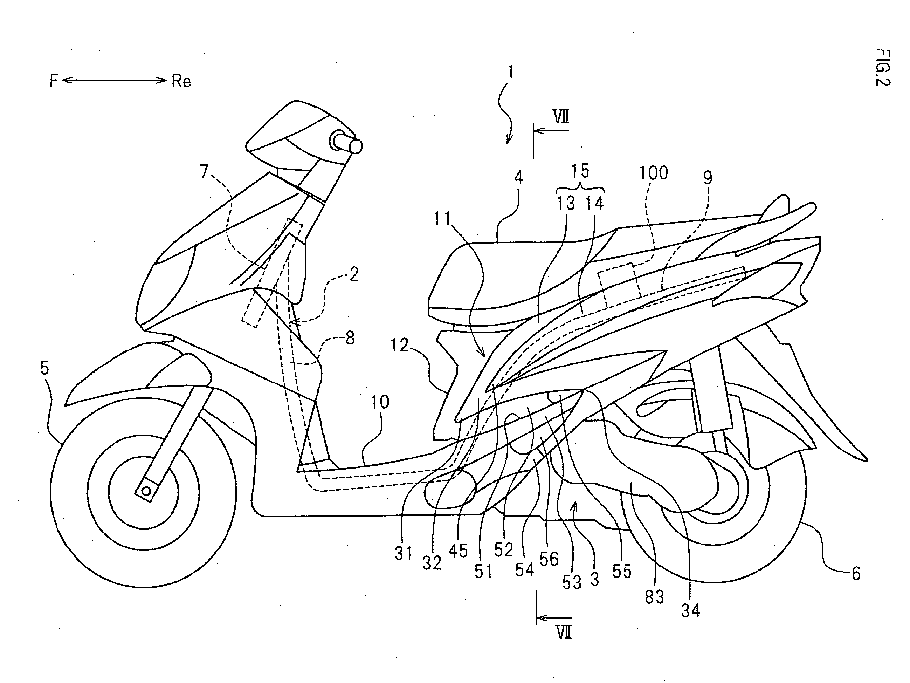

Hereinafter, an embodiment according to the present invention will be described. FIG. 1 is a perspective view of a scooter 1 in this embodiment. FIG. 2 is a left side view of the scooter 1. As shown in FIG. 2, the scooter 1 in this embodiment includes a body frame 2, an engine unit 3 swingably supported to the body frame 2 by a horizontal pivot shaft (not shown), a seat 4 supported to the body frame 2, a front wheel 5, and a rear wheel 6 coupled to a rear portion of the engine unit 3. In the following description, the terms "front", "rear", "left" and "right" respectively mean front, rear, left and right as seen from a rider sitting on the seat 4. In the figures, F, Re, L and R respectively indicate front, rear, left and right.

The body frame 2 includes a head pipe 7, a main frame 8 extending from the head pipe 7 in an obliquely downward and rearward direction, and a seat frame 9 extending from a rear end of the main frame 8 in an obliquely upward and rearward direction. The seat 4 is supported to the seat frame 9. The seat 4 is located above the engine unit 3. Forward to the engine unit 3, a footrest 10 is located.

The scooter 1 includes a body cover 11 for covering at least the body frame 2. The body cover 11 includes a below-the-seat cover 12 and a side cover 15, as covers located below the seat 4 as seen in a vehicle side view. The below-the-seat cover 12 is located forward to the engine unit 3. The side cover 15 is located lateral to a portion of the engine unit 3. In this embodiment, the side cover 15 includes a front cover member 13 and a rear cover member 14. The front cover member 13 and the rear cover member 14 are assembled together to form the side cover 15. The side cover is provided on each of the left side and the right side of the scooter 1.

The below-the-seat cover 12, the front cover member 13 and the rear cover member 14 are formed of a resin. More specifically, the below-the-seat cover 12 is formed of polypropylene (PP). The front cover member 13 is also formed of polypropylene. The rear cover member 14 is formed of ABS. The below-the-seat cover 12 and the front cover member 13 are colored in advance, i.e., at the time of molding. The rear cover member 14 may be colored so as to have the same color as, or a different color from, that of the below-the-seat cover 12 and the front cover member 13.

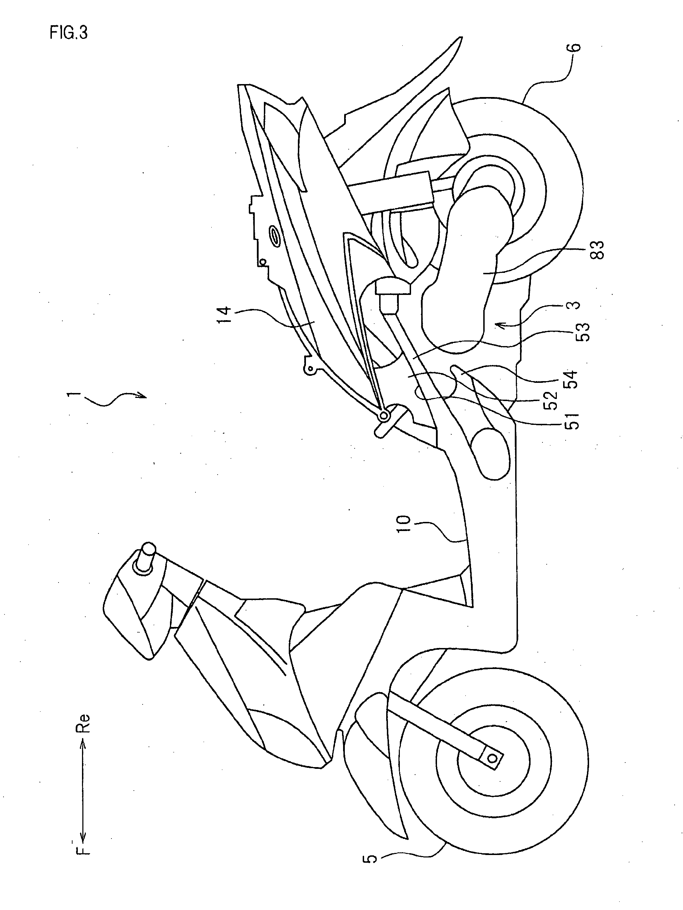

The below-the-seat cover 12 and the front cover member 13 are removable without removing the rear cover member 14. FIG. 3 shows a state where the below-the-seat cover 12 and the front cover member 13 have been removed without removing the rear cover member 14.

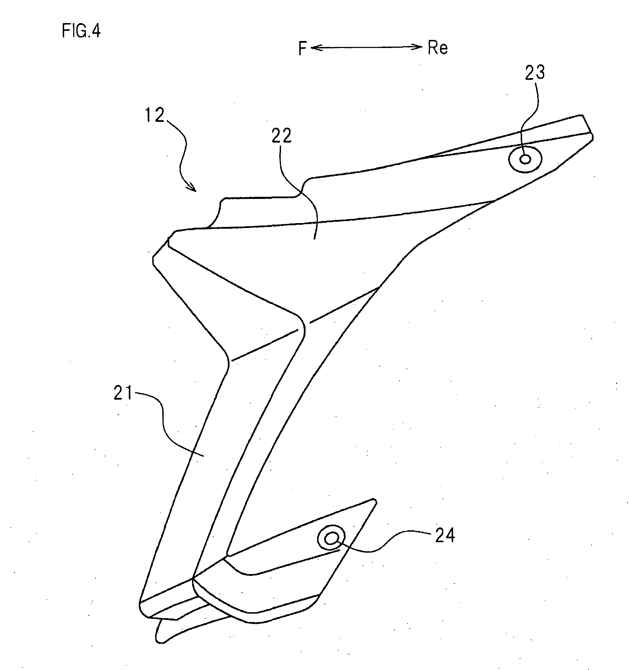

As shown in FIG. 2, the below-the-seat cover 12 is located at a position which is below a front end of the seat 4 and is above the footrest 10 as seen in the vehicle side view. As shown in FIG. 4, the below-the-seat cover 12 includes a front wall portion 21 and side wall portions 22 extending rearward from left and right edges of the front wall portion 21. The side wall portions 22 each have a hole 23 in an upper rear portion thereof and a hole 24 in a lower rear portion thereof.

As shown in FIG. 2, the side cover 15 is located at a position which is rearward to the below-the-seat cover 12 and is below the seat 4 as seen in the vehicle side view. The side cover 15 covers a lateral surface of a portion of the engine unit 3.

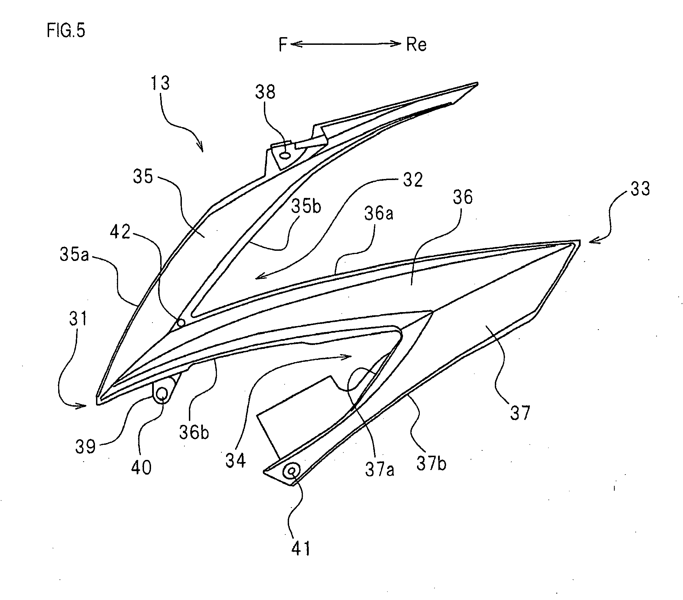

The front cover member 13 is located rearward to the below-the-seat cover 12 as seen in the vehicle side view. As shown in FIG. 5, the front cover member 13 includes an upper portion 35, a central portion 36 and a lower portion 37, and is inverted-Z-shaped as seen in the vehicle side view.

The front cover member 13 has a V-shaped convexed portion 31 protruding forward as seen in the vehicle side view, and a V-shaped concaved portion 32 which is located rearward to the convexed portion 31 and is concaved forward as seen in the vehicle side view. In this specification, the terms "forward" and "rearward" do not necessarily refer to horizontal directions, and encompass a direction inclined to the horizontal direction. Namely, the term "forward" encompasses a precise forward direction and also an obliquely upward and forward direction and an obliquely downward and forward direction. Similarly, the term "rearward" encompasses a precise rearward direction and also an obliquely upward and rearward direction and an obliquely downward and rearward direction. An upper edge 35a of the upper portion 35 and a lower edge 36b of the central portion 36 define a profile of the convexed portion 31. A lower edge 35b of the upper portion 35 and an upper edge 36a of the central portion 36 define a profile of the concaved portion 32.

The front cover member 13 has another V-shaped convexed portion 33 protruding rearward as seen in the vehicle side view, and another V-shaped concaved portion 34 which is located forward to the convexed portion 33 and is concaved rearward as seen in the vehicle side view. The upper edge 36a of the central portion 36 and a lower edge 37b of the lower portion 37 define a profile of the convexed portion 33. The lower edge 36b of the central portion 36 and an upper edge 37a of the lower portion 37 define a profile of the concaved portion 34.

The upper portion 35 of the front cover member 13 has a hole 38. The central portion 36 of the front cover member 13 has a bracket 39 having a hole 40. The concaved portion 32 of the front cover member 13 has a hole 42 in an inner portion thereof.

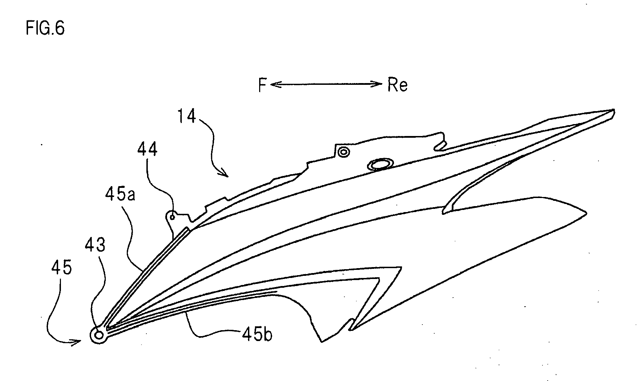

As shown in FIG. 2, the rear cover member 14 is located rearward to the front cover member 13 as seen in the vehicle side view. As shown in FIG. 6, the rear cover member 14 has a V-shaped convexed portion 45 protruding forward as seen in the vehicle side view. A front upper edge 45a and a front lower edge 45b of the rear cover member 14 define a profile of the convexed portion 45. The convexed portion 45 has a hole 43 at a tip thereof. The front upper edge 45a has a hole 44.

A portion of the below-the-seat cover 12, a portion of the front cover member 13, and a portion of the rear cover member 14 are laid on sequentially, and a screw (not shown) is tightened to the hole 44 (see FIG. 6), the hole 38 (see FIG. 5) and the hole 23 (see FIG. 4). Thus, the upper portion 35 of the front cover member 13 and an upper portion of each side wall portion 22 of the below-the-seat cover 12 can be attached to an upper portion of the rear cover member 14. The lower edge 35b of the front cover member 13 is laid on the upper edge 45a of the rear cover member 14, the upper edge 36a of the front cover member 13 is laid on the lower edge 45b of the rear cover member 14, and a screw (not shown) is tightened to the holes 42 and 43. Thus, the front cover member 13 can be attached to the rear cover member 14. The lower edge 36b of the front cover member 13 and a portion of each side wall portion 22 of the below-the-seat cover 12 are laid on each other, and a screw (not shown) is tightened to the holes 24 and 40. Thus, the front cover member 13 can be attached to the below-the-seat cover 12.

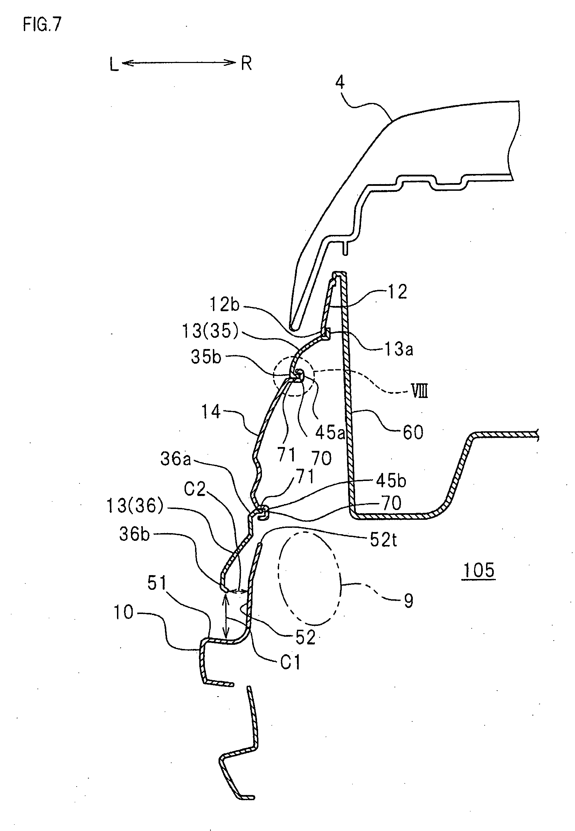

As shown in FIG. 1 and FIG. 2, the scooter 1 includes horizontal walls 51 each located at a position which is outer to the below-the-seat cover 12 in a vehicle width direction and rearward to the below-the-seat cover 12, and vertical walls 52 extending upward from inner ends of the horizontal walls 51 in the vehicle width direction. As shown in FIG. 7, in a vertical cross-sectional view perpendicularly crossing the front-rear direction, each horizontal wall 51 extends substantially horizontally, and each vertical wall 52 extends substantially vertically. In this embodiment, the horizontal wall 51 and the vertical wall 52 are integrally formed. The horizontal wall 51 and the vertical wall 52 are integrally formed with the footrest 10. The horizontal wall 51 forms a portion of the footrest 10. Alternatively, the horizontal wall 51 and the vertical wall 52 may be separate from each other. The horizontal wall 51 and/or the vertical wall 52 may be separate from the footrest 10.

As shown in FIG. 2, the footrest 10 has a rear end portion 53 extending rearward from the horizontal walls 51. The rear end portion 53 is formed to be plate-like. As seen in the vehicle side view, the rear end portion 53 is located inner to the concaved portion 34 of the front cover member 13. The footrest 10 has a rear end portion 54 in a lower portion of the horizontal wall 51. The upper rear end portion 53 and the lower rear end portion 54 are separate from each other in the up-down direction. The lower rear end portion 54 has a hole (not shown). By tightening a screw (not shown) to this hole and the hole 41 (see FIG. 5) of the front cover member 13, the lower portion 37 of the front cover member 13 can be secured to the footrest 10.

As seen in the vehicle side view, the lower edge 36b of the front cover member 13, a rear end portion of the vertical wall 52, and the rear end portion 53 of the footrest 10 define an opening 55. As seen in the vehicle side view, the upper edge 37a of the front cover member 13, the upper rear end portion 53 of the footrest 10 and the lower rear end portion 54 of the footrest 10 define an opening 56.

FIG. 7 is a cross-sectional view of the below-the-seat cover 12, the side cover 15 and the like taken along line VII-VII in FIG. 2. As shown in FIG. 7, the below-the-seat cover 12, the front cover member 13 and the rear cover member 14 are assembled together. In the cross-section shown in FIG. 7, a lower end portion 12b of the below-the-seat cover 12 is laid on an upper end portion 13a of the upper portion 35 of the front cover member 13 such that the lower end portion 12b is outer (i.e., left) to the upper end portion 13a in the vehicle width direction. Reference numeral 60 represents an accommodation box located below the seat 4.

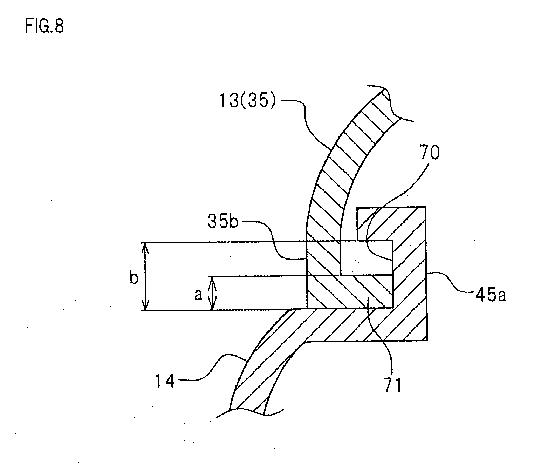

In an upper portion (more specifically, the upper edge 45a) of the rear cover member 14 and also in a lower portion (more specifically, the lower edge 45b) also of the rear cover member 14, an insertion groove 70 is formed, which is concaved inward (i.e., rightward) in the vehicle width direction. In a lower portion (more specifically, the lower edge 35b) of the upper portion 35 of the front cover member 13 and also in an upper portion (more specifically, the upper edge 36a) of the central portion 36 of the front cover member 13, an insertion piece 71 is formed, which extends inward in the vehicle width direction. Each insertion piece 71 is inserted into the corresponding insertion groove 70. As shown in FIG. 8, width "b" in the up-down direction of the insertion groove 70 is larger than thickness "a" in the up-down direction of the insertion piece 71. There is no specific limitation on the ratio of width "b" and thickness "a", and the ratio may be, for example, b/a = 1.2 to 3. Thus, even if the position of the insertion piece 71 is shifted in the up-down direction, the insertion piece 71 enters the insertion groove 70.

As shown in FIG. 7, the lower edge 36b of the central portion 36 of the front cover member 13 is away in an upward direction from the horizontal wall 51 of the footrest 10, and is away in an outward direction from the vertical wall 52 in the vehicle width direction. A gap C1 is provided between the lower edge 36b of the front cover member 13 and the horizontal wall 51. A gap C2 is provided between the lower edge 36b of the front cover member 13 and the vertical wall 52. The lower edge 36b of the front cover member 13 is located at a position which is lower than an upper edge 52t of the vertical wall 52. As seen in the vehicle side view, an upper portion of the vertical wall 52 is concealed by the lower edge 36b of the front cover member 13. Therefore, even if the position of the lower edge 36b of the front cover member 13 is slightly shifted in the up-down direction or in the left-right direction, this merely results in a change of the size of the gap C1 or C2. It is unlikely that the lower edge 36b of the front cover member 13 contacts the horizontal wall 51 or the vertical wall 52. As seen in the vehicle side view, a gap is not made between the lower edge 36b of the front cover member 13 and the upper edge 52t of the vertical wall 52. As can be understood from the above, even if the position at which the front cover member 13 is attached is shifted, the shift can be compensated for by the lower edge 36b.

With the scooter 1 in this embodiment, various types of maintenance works can be performed without removing the entire side cover 15. More specifically, various types of maintenance works can be performed in the state where the rear cover member 14 is kept attached and the front cover member 13 is removed. With the scooter 1 in this embodiment, the front cover member 13 can be removed after the below-the-seat cover 12 is removed. Alternatively, the front cover member 13 may be removed before the below-the-seat cover 12 is removed. With the scooter 1 in this embodiment, a prescribed maintenance work can be performed while both of the front cover member 13 and the rear cover member 14 are kept attached. Now, the maintenance work will be described.

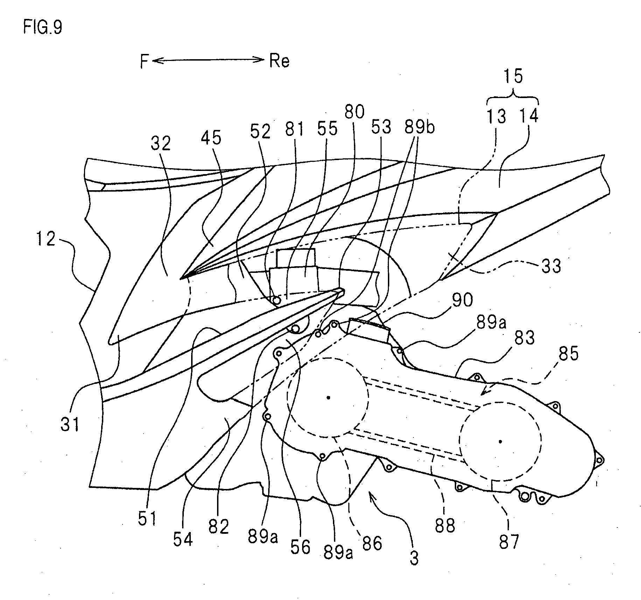

As described above, as seen in the vehicle side view, the openings 55 and 56 are formed inner to the concaved portion 34 of the front cover member 13 (see FIG. 2). As shown in FIG. 9, a throttle body 80 accommodating a throttle valve (not shown) is located inner to the left front cover 13. The throttle body 80 is provided with an adjustment screw 81 for adjusting the idling rotation rate. The adjustment screw 81 is exposed to the lateral side through the opening 55. A maintenance worker can insert a tool such as a screwdriver or the like through the opening 55 and rotate the adjustment screw 81 with the tool. Namely, the worker can adjust the throttle body 80 through the opening 55. The worker can adjust the throttle body 80 while both of the front cover member 13 and the rear cover member 14 are kept attached.

The throttle body 80 is provided with an operation screw 82 for discharging fuel such as gasoline or the like accumulated in the throttle body 80. The operation screw 82 is exposed to the lateral side through the opening 56. The worker can insert a tool such as a screwdriver or the like through the opening 56 and rotate the operation screw 82 with the tool. By rotating the operation screw 82, the worker can discharge the accumulated fuel from the throttle body 80. The worker can perform a work of discharging the fuel accumulated in the throttle body 80 while both of the front cover member 13 and the rear cover member 14 are kept attached.

The throttle body 80 is an example of vehicle member operable by a tool. Needless to say, the vehicle member operable by a tool is not limited to the throttle body 80.

The scooter 1 includes a transmission case 83 for the engine unit 3 and a belt-type continuously variable transmission 85 provided inside the transmission case 83, as a member which is at least partially located inner to the front cover member 13 in the vehicle width direction and is a target of a maintenance work. The belt-type continuously variable transmission 85 includes a primary sheave 86, a secondary sheave 87, and a V belt 88 extended along the primary sheave 86 and the secondary sheave 87. The belt-type continuously variable transmission 85 requires the V belt 88 to be replaced after being used for a long time. In order to replace the V belt 88, the transmission case 83 needs to be removed.

The transmission case 83 has a plurality of holes 89a and 89b. The holes 89a are not covered with the front cover member 13 or the rear cover member 14. The holes 89a are exposed to the lateral side. By contrast, the holes 89b are covered with the front cover member 13. The holes 89b are concealed inner to the front cover member 13. The transmission case 83 is secured to a crankcase 90 or the like by bolts (not shown) inserted into the holes 89a and 89b. According to this embodiment, the bolts inserted into the holes 89b can be exposed without removing the entire side cover 15 (i.e., the front cover member 13 and the rear cover member 14), but by merely removing the front cover member 13. By removing the front cover member 13, the bolts inserted into the holes 89b, as well as the bolts inserted into the holes 89a, are exposed to the lateral side. The worker can rotate the bolts from the lateral side. Thus, the worker can remove the transmission case 83 and replace the V belt 88 while the rear cover member 14 is kept attached. The worker can perform a maintenance work on the belt-type continuously variable transmission 85 while a portion of the side cover 15 (specifically, the rear cover member 14) is kept attached.

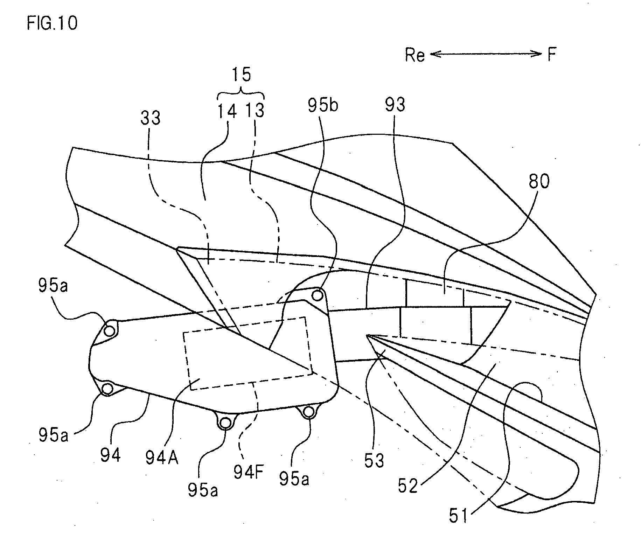

As shown in FIG. 10, an air cleaner 94 is located inner to the right side cover 15. A lateral surface of the air cleaner 94 is partially covered with the side cover 15, and the remaining portion of the lateral surface of the air cleaner 94 is exposed to the lateral side. The air cleaner 94 is coupled to the throttle body 80 via a duct 93. The air cleaner 94 includes a left case (not shown), a right case 94A, and an element 94F located inside each of the left case and the right case 94A. The left case and the right case 94A each have a plurality of holes 95a and 95b. The holes 95a are not covered with the side cover 15 and exposed to the lateral side. By contrast, the hole 95b of each case is covered with the front cover member 13. The hole 95b is concealed inner to the front cover member 13. The left case and the right case 94A are secured to each other by bolts (not shown) inserted into the holes 95a and 95b. The worker can rotate the bolts without removing the entire side cover 15, but by merely removing the front cover member 13. Thus, the worker can remove the right case 94A and replace the element 94F while the rear cover member 14 is kept attached. The worker can perform a maintenance work on the air cleaner 94 while a portion of the side cover 15 (specifically, the rear cover member 14) is kept attached.

The belt-type continuously variable transmission 85 and the air cleaner 94 are each an example of vehicle member on which a maintenance work is performed. Needless to say, a maintenance work may be performed on any other member.

As shown in FIG. 9, as seen in the vehicle side view, the rear end portion 53 of the footrest 10 and the rear cover member 14 are away from each other. In other words, when the front cover member 13 is removed, the rear end portion 53 of the footrest 10 and the rear cover member 14 are away from each other as seen in the vehicle side view. Owing to this, a sufficient space for a maintenance work can be provided with certainty between the rear end portion 53 of the footrest 10 and the rear cover member 14.

As described above, the opening 55 formed between the front cover member 13 and the vertical wall 52 is usable for inserting a tool, and may also be usable for introducing air into an area inner to the side cover 15. Heat is likely to be confined in a space 105 (see FIG. 7) enclosed by the seat 4, the below-the-seat cover 12 and the side cover 15. Especially, in an area above the engine unit 3, heat is likely to be confined as a result of hot air rising from the engine unit 3. In the case where an electric device is located in the space 105, the temperature of the electric device may be raised.

In FIG. 2, reference numeral 100 represents a CDI unit as an example of electric device. The CDI unit 100 is located in the space 105 enclosed by the seat 4, the below-the-seat cover 12 and the side cover 15. As seen in the vehicle side view, the CDI unit 100 is located above the engine unit 3. Also as seen in the vehicle side view, the CDI unit 100 is located obliquely upward and rearward to the opening 55. As the scooter 1 runs, air is introduced into the opening 55 from the front. The introduced air flows in the space 105. Therefore, the CDI unit 100 located in the space 105 is cooled by the air.

Now, a method for attaching the front cover member 13 to the rear cover member 14 will be described. First, the front cover member 13 is laid on the rear cover member 14 such that the convexed portion 45 (see FIG. 6) of the rear cover member 14 enters inside the concaved portion 32 (see FIG. 5) of the front cover member 13 as seen in the vehicle side view. More specifically, the lower edge 35b (see FIG. 5) of the front cover member 13 is laid on the upper edge 45a (see FIG. 6) of the rear cover member 14 such that the lower edge 35b is outer to the upper edge 45a in the vehicle width direction. Further, the upper edge 36a of the front cover member 13 is laid on the lower edge 45b of the rear cover member 14 such that the upper edge 36a is outer to the lower edge 45b in the vehicle width direction. At this point, the insertion piece 71 is inserted into the insertion groove 70 in at least a portion of the lower edge 35b and the upper edge 45a and/or at least a portion of the upper edge 36a and the lower edge 45b.

The front cover member 13 and the rear cover member 14 are laid on each other at the V-shaped portion (i.e., the concaved portion 32 and the convexed portion 45). Therefore, even if there is a slight size error of the front cover member 13 or the rear cover member 14 in the front-rear direction or the up-down direction, the error can be compensated for by slightly moving the position of the front cover member 13 along the upper edge 45a or the lower edge 45b of the rear cover member 14. Namely, by moving the lower edge 35b of the front cover member 13 obliquely along the upper edge 45a of the rear cover member 14, the error can be compensated for. Alternatively, by moving the upper edge 35a of the front cover member 13 obliquely along the lower edge 45b of the rear cover member 14, the error can be compensated for. The front cover member 13 is formed of a resin, and the upper portion 35 and the central portion 36 are formed to make a V shape. Therefore, the front cover member 13 can be minutely deformed relatively easily. For example, the front cover member 13 may be minutely deformed so as to broaden the angle of the concaved portion 32. Alternatively, the front cover member 13 may be minutely deformed so as to narrow the angle of the concaved portion 32.

When the position of the front cover member 13 is finely adjusted or the front cover member 13 is minutely deformed so as to compensate for the error, the position of the lower edge 36b of the front cover member 13 may be shifted. However, as shown in FIG. 7, the lower edge 36b is away from the horizontal wall 51 and also from the vertical wall 52. Therefore, even if the position of the lower edge 36b is shifted, there is no practical problem for assembly.

Next, a screw (not shown) is tightened to the hole 41 of the front cover member 13 to secure the lower portion 37 of the front cover member 13 to the footrest 10. A screw (not shown) is tightened to the hole 42 of the front cover member 13 and the hole 43 of the rear cover member 14 to secure the front cover member 13 and the rear cover member 14 to each other.

Next, the side wall portion 22 (see FIG. 4) of the below-the-seat cover 12 is laid on the front cover member 13, and a screw (not shown) is tightened to the hole 23 of the below-the-seat cover 12, the hole 38 of the front cover member 13 and the hole 44 of the rear cover member 14, to secure the below-the-seat cover 12, the front cover member 13 and the rear cover member 14 to each other. A screw (not shown) is tightened to the hole 24 of the below-the-seat cover 12 and the hole 40 of the front cover member 13 to secure the below-the-seat cover 12 and the front cover member 13 to each other. As a result, the below-the-seat cover 12, the front cover member 13 and the rear cover member 14 can be assembled together.

As described above, according to the scooter 1 in this embodiment, the side cover 15 is formed by assembling the front cover member 13 and the rear cover member 14 together. A relatively large side cover 15 can be formed of the front cover member 13 and the rear cover member 14. Therefore, the side cover 15 can suppress invasion of dust, muddy water or the like into the engine unit 3 or the like. In addition, the front cover member 13 is removable without removing the rear cover member 14. Therefore, a maintenance work can be done by removing the front cover member 13 while the rear cover member 14 is kept attached. Thus, the maintenance work can be done easily.

The front cover member 13 and the rear cover member 14 are assembled together such that the border therebetween is V-shaped as seen in the vehicle side view. The front cover member 13 and the rear cover member 14 are assembled such that the lower edge 35b of the front cover member 13 (i.e., the upper edge of the concaved portion 32) and the upper edge 36a of the front cover member 13 (i.e., the lower edge of the concaved portion 32) are respectively laid on, so as to be outer in the vehicle width direction to, the upper edge 45a of the rear cover member 14 (i.e., the upper edge of the convexed portion 45) and the lower edge 45b of the rear cover member 14 (i.e., the lower edge of the convexedportion 45). Therefore, even if there is a size error of the front cover member 13 or the rear cover member 14 in the front-rear direction or the up-down direction, the error can be compensated for, and thus a gap is not made between the front cover member 13 and the rear cover member 14. Moreover, the lower edge 36b of the front cover member 13 (i.e., the lower edge of the convexed portion 31) is away in an upward direction from the horizontal wall 51, and is away in an outward direction from the vertical wall 52 in the vehicle width direction. Therefore, even if there is a size error of the front cover member 13 or the rear cover member 14 in the up-down direction or in the left-right direction, the error can be compensated for. For these reasons, in this embodiment, invasion of dust or water into an area inner to the side cover 15 can be suppressed, and also deterioration of the external appearance can be avoided.

As shown in FIG. 7, the upper edge 45a of the rear cover member 14 has the insertion groove 70, and the lower edge 35b of the front cover member 13 (i.e., the upper edge of the concaved portion 32) has the insertion piece 71 which is inserted into the insertion groove 70. The lower edge 45b of the rear cover member 14 has the insertion groove 70, and the upper edge 36a of the front cover member 13 (i.e. , the lower edge of the concaved portion 32) has the insertion piece 71 which is inserted into the insertion groove 70. As shown in FIG. 8, width "b" of the insertion groove 70 is larger than thickness "a" of the insertion piece 71. Therefore, even if the position of the insertion piece 71 is slightly shifted, the insertion piece 71 can be fit into the insertion groove 70. The front cover member 13 and the rear cover member 14 can be assembled together well while the size error is compensated for. The portions in which the insertion groove 70 and the insertion piece 71 are formed may be opposite to the above.

In this embodiment, the transmission case 83 and the belt-type continuously variable transmission 85, and the air cleaner 94, are included, each as a member which is at least partially located inner to front cover member 13 in the vehicle width direction and is a target of a maintenance work. In this embodiment, the V belt 88 of the belt-type continuously variable transmission 85 and the element 94F of the air cleaner 94 can be replaced without removing the entire side cover 15, but by merely removing the front cover member 13. A maintenance work can be performed easily on the belt-type continuously variable transmission 85 and the air cleaner 94 from the lateral side in the vehicle width direction.

In this embodiment, as shown in FIG. 9, when the front cover member 13 is removed, the rear end portion 53 of the footrest 10 and the rear cover member 14 are away from each other as seen in the vehicle side view. Therefore, when the front cover member 13 is removed, a space for the maintenance work is provided with certainty between the rear end portion 53 of the footrest 10 and the rear cover member 14. Thus, the maintenance work can be done easily.

In this embodiment, as shown in FIG. 2, as seen in the vehicle side view, the opening 55 is formed between the front cover member 13 and the vertical wall 52. Inside the opening 55, the throttle body 80 is located as a vehicle member operable by a tool inserted into the opening 55. The throttle body 80 can be operated through the opening 55, and therefore, without removing the front cover member 13 as well as the rear cover member 14. Thus, the maintenance work is made easier.

As shown in FIG. 2, the CDI unit 100 is located in the space 105 (see FIG. 7) enclosed by the seat 4, the below-the-seat cover 12 and the side cover 15. The CDI unit 100 is located obliquely upward and rearward to the opening 55 as seen in the vehicle side view. Therefore, the air sucked through the opening 55 easily flows around the CDI unit 100 and cools the CDI unit 100. As a result, a temperature rise of the CDI unit 100 can be suppressed.

As shown in FIG. 5, the front cover member 13 has the V-shaped convexed portion 33 protruding rearward as seen in the vehicle side view and the V-shaped concaved portion 34 which is located forward to the convexed portion 33 and is concaved rearward as seen in the vehicle side view. As shown in FIG. 2, as seen in the vehicle side view, the rear end portion 53 of the footrest 10 is located inner to the concaved portion 34. The front cover member 13 is formed to be generally Z-shaped. Precisely, the left front cover member 13 is formed to be inverted-Z-shaped, whereas the right front cover member 13 is formed to be Z-shaped. The lower portion 37 of the front cover member 13 is partially located below the rear end portion 53 of the footrest 10. The lower portion 37 of the front cover member 13 is secured to the rear end portion 54, which is below the rear end portion 53 of the footrest 10 by a bolt (not shown) tightened to the hole 41. Since the lower portion 37 of the front cover member 13 can be secured in this manner, the rigidity of the front cover member 13 when the front cover member 13 is attached can be increased.

### Reference Signs List

- 1: Scooter
- 2: Body frame
- 3: Engine unit
- 4: Seat
- 10: Footrest
- 12: Below-the-seat cover
- 13: Front cover member
- 14: Rear cover member
- 15: Side cover
- 31: Convexed portion of the front cover member
- 32: Concaved portion of the front cover member
- 35b: Lower edge (upper edge of the concaved portion of the front cover member)
- 36a: Upper edge (lower edge of the concaved portion of the front cover member)
- 36b: Lower edge (lower edge of the convexed portion of the front cover member)
- 45: Convexed portion of the rear cover member
- 45a: Upper edge (upper edge of the convexed portion of the rear cover member)
- 45b: Lower edge (lower edge of the convexed portion of the rear cover member)
- 51: Horizontal wall
- 52: Vertical wall

## Claims

1. A scooter, comprising
an engine unit (3) swingably supported to a body frame (2) ;
a footrest (10) located forward to the engine unit (3);
a seat (4) located above the engine unit (3);
a below-the-seat cover (12) located at a position which is below a front end of the seat (4) and is above the footrest (10) as seen in a vehicle side view, and at least partially located forward to the engine unit (3); and
a side cover (15) located at a position which is rearward to the below-the-seat cover (12) and is below the seat (4) as seen in the vehicle side view, and at least partially located lateral to a portion of the engine unit (3);
**characterized in that**
the side cover (15) includes a front cover member (13) located rearward to the below-the-seat cover (12) as seen in the vehicle side view and a rear cover member (14) located rearward to the front cover member (13) as seen in the vehicle side view;
the front cover member (13) has a V-shaped convexed portion (31) protruding forward as seen in the vehicle side view and a V-shaped concaved portion (32) located rearward to the convexed portion (31) and concaved forward as seen in the vehicle side view;
the rear cover member (14) has a V-shaped convexed portion (45) protruding forward as seen in the vehicle side view;
the front cover member (13) and the rear cover member (14) are assembled together such that the convexed portion (45) of the rear cover member (14) enters the concaved portion (32) of the front cover member (13) as seen in a vehicle side view and such that an upper edge (35b) and a lower edge (36a) of the concaved portion (32) of the front cover member (13) are respectively laid on, and are outer in a vehicle width direction to, an upper edge (45a) and a lower edge (45b) of the convexed portion (45) of the rear cover member (14);
the front cover member (13) is removable without removing the rear cover member (14);
the scooter further includes:
a horizontal wall (51) located at a position which is outer to the below-the-seat cover (12) in the vehicle width direction and is rearward to the below-the-seat cover (12); and
a vertical wall (52) extending upward from the horizontal wall (51); and
a lower edge (36b) of the convexed portion (31) of the front cover member (13) is away in an upward direction (C1) from the horizontal wall (51), and is away in an outward direction (C2) from the vertical wall (52) in the vehicle width direction.

2. A scooter according to claim 1, wherein:
among the upper edge (35b) of the concaved portion (32) of the front cover member (13) and the upper edge (45a) of the convexed portion (45) of the rear cover member (14), one has an insertion groove (70) concaved inward in the vehicle width direction, and the other has an insertion piece (71) extending inward in the vehicle width direction and insertable into the insertion groove (70);
among the lower edge (36a) of the concaved portion (32) of the front cover member (13) and the lower edge (45b) of the convexed portion (45) of the rear cover member (14), one has an insertion groove (70) concaved inward in the vehicle width direction, and the other has an insertion piece (71) extending inward in the vehicle width direction and insertable into the insertion groove (70); and
the insertion grooves (70) each have a width larger than a thickness of the insertion piece (71) corresponding thereto.

3. A scooter according to claim 1, wherein:
the upper edge (45a) of the convexed portion (45) of the rear cover member (14) has an insertion groove (70) concaved inward in the vehicle width direction, and the upper edge (35b) of the concaved portion (32) of the front cover member (13) has an insertion piece (71) extending inward in the vehicle width direction and insertable into the insertion groove (70) ;
the lower edge (45b) of the convexed portion (45) of therearcovermember (14) has an insertion groove (70) concaved inward in the vehicle width direction, and the lower edge (36a) of the concaved portion (32) of the front cover member (13) has an insertion piece (71) extending inward in the vehicle width direction and insertable into the insertion groove (70) ; and
the insertion grooves (70) each have a width larger than a thickness of the insertion piece (71) corresponding thereto.

4. A scooter according to claim 1, further comprising a member on which a maintenance work is to be performed, the member being at least partially located inner to the front cover member (13) in the vehicle width direction.

5. A scooter according to claim 4, wherein the engine unit (3) includes, as the member, a transmission case (83), a portion of which is located lateral to the front cover member (13) and the remaining portion of which is exposed; and a belt-type continuously variable transmission (85) accommodated in the transmission case (83).

6. A scooter according to claim 4, wherein the member is an air cleaner (94), a portion of which is located lateral to the front cover member (13) and the remaining portion of which is exposed.

7. A scooter according to claim 1, wherein:
the horizontal wall (51) forms a portion of the footrest (10);
the footrest (10) has a rear end portion (53) extending rearward from the horizontal wall (51); and
when the front cover member (13) is removed, the rear end portion (53) of the footrest (10) and the rear cover member (14) are away from each other as seen in the vehicle side view.

8. A scooter according to claim 1, wherein:
an opening (55) is formed between the front cover member (13) and the vertical wall (52) as seen in the vehicle side view; and
a vehicle member (80, 85, 94) operable by a tool inserted into the opening (55) is located inside the opening (55).

9. A scooter according to claim 1, further comprising an electric device (100) located in a space (105) enclosed by the seat (4), the below-the-seat cover (12) and the side cover (15), wherein:
an opening (55) is formed between the front cover member (13) and the vertical wall (52) as seen in the vehicle side view; and
the electric device (100) is located at a position obliquely upward and rearward to the opening (55) as seen in the vehicle side view.

10. A scooter according to claim 1, wherein:
the front cover member (13) has another V-shaped convexed portion (33) protruding rearward as seen in the vehicle side view and another V-shaped concaved portion (34) located forward to the another convexed portion (33) and concaved rearward as seen in the vehicle side view;
the horizontal wall (51) forms a portion of the footrest (10);
the footrest (10) has a rear end portion (53) extending rearward from the horizontal wall (51); and
the rear end portion (53) is located inner to the another concaved portion (34) as seen in the vehicle side view.

## Patentansprüche

1. Ein Roller, der folgende Merkmale aufweist:
eine Motoreinheit (3), die schwingfähig durch einen Körperrahmen (2) getragen wird;
eine Fußstütze (10), die sich vor der Motoreinheit (3) befindet;
einen Sitz (4), der sich über der Motoreinheit (3) befindet;
eine Unter-dem-Sitz-Abdeckung (12), die sich an einer Position befindet, die in einer Fahrzeugseitenansicht unter einem vorderen Ende des Sitzes (4) ist und über der Fußstütze (10) ist, und sich zumindest teilweise vor der Motoreinheit (3) befindet; und
eine Seitenabdeckung (15), die sich an einer Position befindet, die in der Fahrzeugseitenansicht hinter der Unter-dem-Sitz-Abdeckung (12) ist und unter dem Sitz (4) ist, und sich zumindest teilweise seitlich von einem Abschnitt der Motoreinheit (3) befindet;
**dadurch gekennzeichnet, dass**:
die Seitenabdeckung (15) ein vorderes Abdeckbauteil (13), das sich in der Fahrzeugseitenansicht hinter der Unter-dem-Sitz-Abdeckung (12) befindet, und ein hinteres Abdeckbauteil (14) aufweist, das sich in der Fahrzeugseitenansicht hinter dem vorderen Abdeckbauteil (13) befindet;
das vordere Abdeckbauteil (13) einen V-förmigen konvexen Abschnitt (31), der in der Fahrzeugseitenansicht nach vorne vorsteht, und einen V-förmigen konkaven Abschnitt (32) aufweist, der sich in der Fahrzeugseitenansicht hinter dem konvexen Abschnitt (31) befindet und nach vorne hin konkav ist;
das hintere Abdeckbauteil (14) einen V-förmigen konvexen Abschnitt (45) aufweist, der in der Fahrzeugseitenansicht nach vorne hin vorsteht;
das vordere Abdeckbauteil (13) und das hintere Abdeckbauteil (14) derart zusammengebaut sind, dass der konvexe Abschnitt (45) des hinteren Abdeckbauteils (14) in einer Fahrzeugseitenansicht in den konkaven Abschnitt (32) des vorderen Abdeckbauteils (13) eintritt, und derart, dass eine obere Kante (35b) und eine untere Kante (36a) des konkaven Abschnitts (32) des vorderen Abdeckbauteils (13) jeweils auf einer oberen Kante (45a) und einer unteren Kante (45b) des konvexen Abschnitts (45) des hinteren Abdeckbauteils (14) aufliegen und sich in einer Fahrzeugbreitenrichtung weiter außen als diese befinden;
das vordere Abdeckbauteil (13) entfernbar ist, ohne das hintere Abdeckbauteil (14) zu entfernen;
wobei der Roller ferner folgende Merkmale umfasst:
eine horizontale Wand (51), die sich an einer Position befindet, die in der Fahrzeugbreitenrichtung weiter außen ist als die Unter-dem-Sitz-Abdeckung (12) und hinter der Unter-dem-Sitz-Abdeckung (12) ist; und
eine vertikale Wand (52), die sich von der horizontalen Wand (51) nach oben erstreckt; und
eine untere Kante (36d) des konvexen Abschnitts (31) des vorderen Abdeckbauteils (31) in der Fahrzeugbreitenrichtung in einer Aufwärtsrichtung (C1) entfernt von der horizontalen Wand (51) ist und in einer Auswärtsrichtung (C2) von der vertikalen Wand (52) entfernt ist.

2. Ein Roller gemäß Anspruch 1, bei dem:
unter der oberen Kante (35b) des konkaven Abschnitts (32) des vorderen Abdeckbauteils (13) und der oberen Kante (45a) des konvexen Abschnitts (45) des hinteren Abdeckbauteils (14) eine eine Einfügungsrille (70) aufweist, die in der Fahrzeugbreitenrichtung nach innen konkav ist, und die andere ein Einfügungsstück (71) aufweist, das sich in der Fahrzeugbreitenrichtung nach innen erstreckt und in die Einfügungsrille (70) einführbar ist;
unter der unteren Kante (36a) des konkaven Abschnitts (32) des vorderen Abdeckbauteils (13) und der unteren Kante (45b) des konvexen Abschnitts (45) des hinteren Abdeckbauteils (14) eine eine Einfügungsrille (70) aufweist, die in der Fahrzeugbreitenrichtung nach innen konkav ist, und die andere ein Einfügungsstück (71) aufweist, das sich in der Fahrzeugbreitenrichtung nach innen erstreckt und in die Einfügungsrille (70) einführbar ist; und
die Einfügungsrillen (70) jeweils eine Breite aufweisen, die größer ist als eine Dicke des Einfügungsstücks (71), das derselben entspricht.

3. Ein Roller gemäß Anspruch 1, bei dem:
die obere Kante (45a) des konvexen Abschnitts (45) des hinteren Abdeckbauteils (14) eine Einfügungsrille (70) aufweist, die in der Fahrzeugbreitenrichtung nach innen konkav ist, und die obere Kante (35b) des konkaven Abschnitts (32) des vorderen Abdeckbauteils (13) ein Einfügungsstück (71) aufweist, das sich in der Fahrzeugbreitenrichtung nach innen erstreckt und in die Einfügungsrille (70) einführbar ist;
die untere Kante (45b) des konvexen Abschnitts (45) des hinteren Abdeckbauteils (14) eine Einfügungsrille (70) aufweist, die in der Fahrzeugbreitenrichtung nach innen konkav ist, und die untere Kante (36a) des konkaven Abschnitts (32) des vorderen Abdeckbauteils (13) ein Einfügungsstück (71) aufweist, das sich in der Fahrzeugbreitenrichtung nach innen erstreckt und in die Einfügungsrille (70) einführbar ist; und
die Einfügungsrillen (70) jeweils eine Breite aufweisen, die größer ist als eine Dicke des Einfügungsstücks (71), das derselben entspricht.

4. Ein Roller gemäß Anspruch 1, der ferner ein Bauteil aufweist, an dem eine Wartungsarbeit durchgeführt werden soll, wobei das Bauteil sich in der Fahrzeugbreitenrichtung zumindest teilweise innerhalb des vorderen Abdeckbauteils (13) befindet.

5. Ein Roller gemäß Anspruch 4, bei dem die Motoreinheit (3) als das Bauteil ein Getriebegehäuse (83), ein Abschnitt dessen sich seitlich von dem vorderen Abdeckbauteil (13) befindet und dessen verbleibender Abschnitt freiliegt; und ein riemenartiges stufenlos variables Getriebe (85) aufweist, das in dem Getriebegehäuse (83) untergebracht ist.

6. Ein Roller gemäß Anspruch 4, bei dem das Bauteil ein Luftreiniger (94) ist, ein Abschnitts dessen sich seitlich von dem vorderen Abdeckbauteil (13) befindet und dessen verbleibender Abschnitt freiliegt.

7. Ein Roller gemäß Anspruch 1, bei dem:
die horizontale Wand (51) einen Abschnitt der Fußstütze (10) bildet;
die Fußstütze (10) einen hinteren Endabschnitt (53) aufweist, der sich von der horizontalen Wand (51) nach hinten erstreckt; und
wenn das vordere Abdeckbauteil (13) entfernt ist, der hintere Endabschnitt (53) der Fußstütze (10) und das hintere Abdeckbauteil (14) in der Fahrzeugseitenansicht entfernt voneinander sind.

8. Ein Roller gemäß Anspruch 1, bei dem:
eine Öffnung (55) in der Fahrzeugseitenansicht zwischen dem vorderen Abdeckbauteil (13) und der vertikalen Wand (52) gebildet ist; und
ein Fahrzeugbauteil (80, 85, 94), das durch ein Werkzeug bedienbar ist, das in die Öffnung (55) eingeführt ist, sich innerhalb der Öffnung (55) befindet.

9. Ein Roller gemäß Anspruch (1), der ferner eine elektrische Vorrichtung (100) aufweist, die sich in einem Raum (105) befindet, der durch den Sitz (4), die Unter-dem-Sitz-Abdeckung (12) und die Seitenabdeckung (15) eingeschlossen ist, bei dem:
in der Fahrzeugseitenansicht eine Öffnung (55) zwischen dem vorderen Abdeckbauteil (13) und der vertikalen Wand (52) gebildet ist; und
die elektrische Vorrichtung (10) sich an einer Position befindet, die in der Fahrzeugseitenansicht schräg nach oben und nach hinten von der Öffnung (55) ist.

10. Ein Roller gemäß Anspruch 1, bei dem:
das vordere Abdeckbauteil (13) einen weiteren V-förmigen konvexen Abschnitt (33), der in der Fahrzeugseitenansicht nach hinten vorsteht, und einen weiteren V-förmigen konkaven Abschnitt (34) aufweist, der sich in der Fahrzeugseitenansicht vor dem weiteren konvexen Abschnitts (33) befindet und nach hinten konkav ist;
die horizontale Wand (51) einen Abschnitt der Fußstütze (10) bildet;
die Fußstütze (10) einen hinteren Endabschnitt (53) aufweist, der sich von der horizontalen Wand (51) nach hinten erstreckt; und
der hintere Endabschnitt (53) sich in der Fahrzeugseitenansicht innerhalb des weiteren konkaven Abschnitts (34) befindet.

## Revendications

1. Scooter, comprenant
une unité de moteur (3) supportée de manière oscillante sur un châssis de carrosserie (2);
un repose-pied (10) situé en avant de l'unité de moteur (3);
un siège (4) situé au-dessus de l'unité de moteur (3);
un couvercle sous le siège (12) situé en une position qui se trouve au-dessous d'une extrémité avant du siège (4) et se trouve au-dessus du repose-pied (10), tel que vu en vue de côté du véhicule, et situé au moins partiellement à l'avant de l'unité de moteur (3); et
un couvercle latéral (15) situé en une position qui se trouve à l'arrière du couvercle sous le siège (12) et se trouve au-dessous du siège (4), tel que vu en vue de côté du véhicule, et situé au moins partiellement latéralement par rapport à une partie de l'unité de moteur (3);
**caractérisé par le fait que**
le couvercle latéral (15) comporte un élément de couvercle avant (13) situé à l'arrière du couvercle sous le siège (12), tel que vu en vue de côté du véhicule, et un élément de couvercle arrière (14) situé à l'arrière de l'élément de couvercle avant (13), tel que vu en vue de côté du véhicule;
l'élément de couvercle avant (13) présente une partie convexe en forme de "V" (31) faisant saillie vers l'avant, tel que vu en vue de côté du véhicule, et une partie concave en forme de "V" (32) située à l'arrière de la partie convexe (31) et concave vers l'avant, tel que vu en vue de côté du véhicule;
l'élément de couvercle arrière (14) présente une partie convexe en forme de "V" (45) faisant saillie vers l'avant, tel que vu en vue de côté du véhicule;
l'élément de couvercle avant (13) et l'élément de couvercle arrière (14) sont assemblés l'un à l'autre de sorte que la partie convexe (45) de l'élément de couvercle arrière (14) pénètre dans la partie concave (32) de l'élément de couvercle avant (13), tel que vu en vue de côté du véhicule et de sorte qu'un bord supérieur (35b) et un bord inférieur (36a) de la partie concave (32) de l'élément de couvercle avant (13) soient respectivement placés sur, et soient, dans une direction de largeur du véhicule, extérieurs à un bord supérieur (45a) et un bord inférieur (45b) de la partie convexe (45) de l'élément de couvercle arrière (14);
l'élément de couverture avant (13) est amovible sans enlever l'élément de couverture arrière (14);
le scooter comporte par ailleurs:
une paroi horizontale (51) située en une position qui est extérieure au couvercle sous le siège (12) dans la direction de largeur du véhicule et à l'arrière du couvercle sous le siège (12); et
une paroi verticale (52) s'étendant vers le haut à partir de la paroi horizontale (51); et
un bord inférieur (36b) de la partie convexe (31) de l'élément de couvercle avant (13) est éloigné dans une direction vers le haut (C1) de la paroi horizontale (51), et est éloigné dans une direction vers l'extérieur (C2) de la paroi verticale (52) dans la direction de largeur du véhicule.

2. Scooter selon la revendication 1, dans lequel:
parmi le bord supérieur (35b) de la partie concave (32) de l'élément de couvercle avant (13) et le bord supérieur (45a) de la partie convexe (45) de l'élément de couvercle arrière (14), l'un présente une rainure d'insertion (70) concave vers l'intérieur dans la direction de largeur du véhicule, et l'autre présente une pièce d'insertion (71) s'étendant vers l'intérieur dans la direction de largeur du véhicule et pouvant être introduite dans la rainure d'insertion (70);
parmi le bord inférieur (36a) de la partie concave (32) de l'élément de couvercle avant (13) et le bord inférieur (45b) de la partie convexe (45) de l'élément de couvercle arrière (14), l'un présente une rainure d'insertion (70) concave vers l'intérieur dans la direction de largeur du véhicule, et l'autre présente une pièce d'insertion (71) s'étendant vers l'intérieur dans la direction de largeur du véhicule et pouvant être introduite dans la rainure d'insertion (70); et
les rainures d'insertion (70) présentent, chacune, une largeur supérieure à l'épaisseur de la pièce d'insertion (71) qui y correspond.

3. Scooter selon la revendication 1, dans lequel:
le bord supérieur (45a) de la partie convexe (45) de l'élément de couvercle arrière (14) présente une rainure d'insertion (70) concave vers l'intérieur dans la direction de largeur du véhicule, et le bord supérieur (35b) de la partie concave (32) du couvercle avant (13) présente une pièce d'insertion (71) s'étendant vers l'intérieur dans la direction de largeur du véhicule et pouvant être introduite dans la rainure d'insertion (70);
le bord inférieur (45b) de la partie convexe (45) de l'élément de couvercle arrière (14) présente une rainure d'insertion (70) concave vers l'intérieur dans la direction de largeur du véhicule, et le bord inférieur (36a) de la partie concave (32) de l'élément de couvercle avant (13) présente une pièce d'insertion (71) s'étendant vers l'intérieur dans la direction de largeur du véhicule et pouvant être introduite dans la rainure d'insertion (70); et
les rainures d'insertion (70) présentent, chacune, une largeur supérieure à l'épaisseur de la pièce d'insertion (71) qui y correspond.

4. Scooter selon la revendication 1, comprenant par ailleurs un élément sur lequel doit être effectué un travail d'entretien, l'élément étant situé au moins partiellement intérieurement à l'élément de couvercle avant (13) dans la direction de largeur du véhicule.

5. Scooter selon la revendication 4, dans lequel l'unité de moteur (3) comporte, comme élément, un boîtier de transmission (83) dont une partie est située latéralement par rapport à la partie avant du couvercle (13) et dont la partie restante est exposée ; et une transmission variable en continu du type à courroie (85) logée dans le boîtier de transmission (83).

6. Scooter selon la revendication 4, dans lequel l'élément est un filtre à air (94) dont une partie se trouve latéralement par rapport à l'élément de couvercle avant (13) et dont la partie restante est exposée.

7. Scooter selon la revendication 1, dans lequel:
la paroi horizontale (51) constitue une partie du repose-pied (10);
le repose-pied (10) présente une partie d'extrémité arrière (53) s'étendant vers l'arrière à partir de la paroi horizontale (51); et
lorsque l'élément de couvercle avant (13) est enlevé, la partie d'extrémité arrière (53) du repose-pied (10) et l'élément de couvercle arrière (14) sont éloignés l'un de l'autre, tel qu'on peut le voir en vue de côté du véhicule.

8. Scooter selon la revendication 1, dans lequel:
une ouverture (55) est formée entre l'élément de couvercle avant (13) et la paroi verticale (52), tel qu'on peut le voir en vue de côté du véhicule; et
un élément de véhicule (80, 85, 94) pouvant être actionné par un outil introduit dans l'ouverture (55) est situé à l'intérieur de l'ouverture (55).

9. Scooter selon la revendication 1, comprenant par ailleurs un dispositif électrique (100) situé dans un espace (105) entouré par le siège (4), le couvercle sous le siège (12) et le couvercle latéral (15), dans lequel:
une ouverture (55) est formée entre l'élément de couvercle avant (13) et la paroi verticale (52), tel qu'on peut le voir en vue de côté du véhicule; et
le dispositif électrique (100) est situé en une position oblique vers le haut et vers l'arrière par rapport à l'ouverture (55), tel qu'on peut le voir en vue de côté du véhicule.

10. Scooter selon la revendication 1, dans lequel:
l'élément de couvercle avant (13) présente une autre partie convexe en forme de "V" (33) faisant saillie vers l'arrière, tel qu'on peut le voir en vue de côté du véhicule, et une autre partie concave en forme de "V" (34) située en avant de l'autre partie convexe (33) et concave vers l'arrière, tel qu'on peut le voir en vue de côté du véhicule;
la paroi horizontale (51) constitue une partie du repose-pied (10);
le repose-pied (10) présente une partie d'extrémité arrière (53) s'étendant vers l'arrière à partir de la paroi horizontale (51); et
la partie d'extrémité arrière (53) est située à l'intérieur de l'autre partie concave (34), tel qu'on peut le voir en vue de côté du véhicule.
